# EUROPÄISCHE PATENTSCHRIFT

(11) **EP 4 127 354 B1**
(45) Veröffentlichungstag und Bekanntmachung des Hinweises auf die Patenterteilung: **13.08.2025**
(21) Anmeldenummer: 21704825.5
(22) Anmeldetag: 17.02.2021
(51) Int. Cl.: E04F 15/02, B29C 63/00

(54) **PANEEL MIT VERSIEGELTER PANEELKANTE UND VERFAHREN ZU DESSEN HERSTELLUNG**
PANEL WITH SEALED PANEL EDGE AND METHOD FOR PRODUCING THE SAME
PANNEAU POURVU DE BORD DE PANNEAU SCELLÉ ET SON PROCÉDÉ DE FABRICATION

(30) Priorität: 24.03.2020 EP 20165196
(43) Veröffentlichungstag der Anmeldung: 08.02.2023
(73) Patentinhaber: Surface Technologies GmbH & Co. KG, 15837 Baruth (DE)
(72) Erfinder: BUHLMANN, Carsten, 15834 Rangsdorf (DE); HERRMANN, Eberhard, 23970 Wismar (DE)
(74) Vertreter: Michalski Hüttermann & Partner Patentanwälte mbB
(86) Internationale Anmeldenummer: PCT/EP2021/053831
(87) Internationale Veröffentlichungsnummer: WO 2021/190822

(56) Entgegenhaltungen:
- WO-A1-2016/182896
- WO-A2-2007/113676

## Beschreibung

Die vorliegende Erfindung betrifft ein Verfahren zur Herstellung eines Paneels mit versiegelter Paneelkante, ein Rohpaneel mit versiegelter Paneelkante und eine Anordnung eines Paneels umfassend ein derartiges Rohpaneel mit einer Sockelleiste.

Paneele mit Halteprofilen sind an sich bekannt und können insbesondere als dekorierte Wand- oder Bodenpaneele verwendet werden, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, Kunststoff oder Kompositmaterial, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist beispielsweise ein gedrucktes Papier, das mit einem Harz imprägniert ist. Auch die Deckschicht und die übrigen Schichten werden meist aus Harz hergestellt.

Solche bekannten Paneele weisen in an sich bekannter Weise an den Paneelkanten Halteprofile auf. Die Halteprofile halten die Paneele im verlegten Zustand durch eine formschlüssige Verbindung zusammen. Dabei sind verschiedene Halteprofile bekannt. Einfache Spundungen weisen eine einfache Nut und einen komplementären Spund auf, die senkrecht zur Paneelebene wirken. Komplexere Halteprofile sind insbesondere bei Paneelen zur leimlosen Verlegung bekannt. Dabei sind die komplementären Halteprofile von zwei zu verbindenden Paneelen so ausgestaltet, dass die formschlüssige Verbindung durch Haken und Hinterschneidungen auch ein Auseinanderziehen der Paneele verhindert. Die Paneele können deswegen schwimmend verlegt werden, müssen also nicht mit dem Boden verklebt werden, und sie müssen auch nicht miteinander verleimt werden. Dadurch ist das Verlegen derartiger Paneele besonders einfach und schnell und der verlegte Boden kann sich durch die Flexibilität der Verbindungen auch in gewissem Maße an Unebenheiten des Bodens anpassen und auch auf Temperaturschwankungen reagieren. Zudem können Paneele bei einer leimlosen Verlegung leicht ausgetauscht werden, wenn sie beschädigt sind.

WO 2007/113676 A2 beschreibt ein Bodenpaneel, umfassend mindestens einen ein- oder mehrteiligen Träger, der zumindest teilweise aus Holz oder Holzwerkstoff besteht, wobei das Bodenpaneel zumindest an zwei gegenüberliegenden Seiten profilierte Randabschnitte aufweist, die zumindest Kupplungsteile umfassen, sowie zumindest an einer dieser Seiten einer Fase, so dass das Bodenpaneel mindestens eine erste Fläche aufweist, die von der eigentlichen Oberseite des Bodenpaneels gebildet wird, eine zweite Fläche, die von der Fläche der Fase gebildet wird, und eine dritte Fläche, die von dem Abschnitt des profilierten Randabschnitts gebildet wird, der sich unterhalb der Fase erstreckt, wobei sowohl auf der ersten als auch auf der zweiten und dritten Oberfläche Beschichtungen vorhanden sind, eine erste Beschichtung, eine zweite Beschichtung bzw. eine dritte Beschichtung, wobei zumindest eine dieser Beschichtungen als verfestigte Substanz ausgebildet ist.

WO 2016/182896 A1 offenbart ein Fußbodenplatte mit einer dekorativen Oberflächenschicht, die auf ein Substrat aufgebracht ist, wobei das Substrat an einer Seitenkante MDF- oder HDF-Material aufweist, wobei die Seitenkante (2-3) sowohl mit einem Imprägniermittel als auch mit einem Versiegelungsmittel auf der Basis eines superabsorbierenden Materials behandelt ist.

Ein Problem derartig verlegter Paneele ist es jedoch, dass die Fugen anfällig für den Eintritt von Flüssigkeiten sind. Dabei sind die Paneelkanten der Feuchtigkeit ungeschützt ausgesetzt. Während die Oberfläche von Paneelen zumeist auf eine hohe Beanspruchung ausgelegt ist und auch entsprechend gegen Feuchtigkeit geschützt ist, liegen an den Paneelkanten die verschiedenen Schichten des Paneels frei. Diese sind jedoch nicht alle gegen Feuchtigkeit unempfindlich. Die verschiedenen Schichten des Paneels können somit beim Eindringen von Feuchtigkeit in die Fugen gegebenenfalls Feuchtigkeit aufnehmen und beispielsweise ungewollt aufquellen.

Es gibt deswegen ein Bedürfnis, die Paneelkanten von Paneelen zu versiegeln.

Bekannte Paneele können umlaufende Fasen aufweisen. Durch Fasen sind die Paneele an den Kanten gegen Abstoßungen robuster und weisen ein ansprechenderes Aussehen auf. Ein Nachteil derartiger Fasen ist jedoch, dass sich bei aneinandergefügten Paneelen V-Fugen ausbilden, in denen sich Wasser, beispielsweise beim Wischen des Bodens, sammeln kann. Somit sind die ansonsten vorteilhaften Paneele mit Fase besonders anfällig für den Eintritt von Flüssigkeiten in die Fugen und die Paneelkanten.

Der Feuchtigkeitsschutz von Paneelen bietet deswegen noch Verbesserungspotential.

Es ist daher die Aufgabe der vorliegenden Erfindung Paneele mit verbessertem Feuchtigkeitsschutz bereitzustellen.

Gelöst wird diese Aufgabe durch das Verfahren gemäß Anspruch 1 sowie ferner durch ein Rohpaneel gemäß Anspruch 13 und eine Anordnung nach Anspruch 15. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Verfahren zum Herstellen eines Paneels mit versiegelter Paneelkante vorgeschlagen, aufweisend zumindest die Verfahrensschritte:
a) Bereitstellen eines Rohpaneels umfassend eine Paneeloberseite, eine Paneelunterseite und zumindest ein Paar sich gegenüberliegender Paneelkanten, wobei das Rohpaneel einen Trägerplattenkern und eine auf die Paneeloberseite aufgebrachte Druckuntergrundschicht aufweist,
b) Ausbilden einer Fase zwischen zumindest einer Paneelkante des Paars sich gegenüberliegender Paneelkanten und der Paneeloberseite,
c) Versiegeln der zumindest einen Paneelkante, wobei das Versiegeln ein Imprägnieren mit einem Imprägniermittel umfasst, wobei das Imprägniermittel auf die zumindest eine Paneelkante und auf die Fase aufgetragen wird, wobei das Imprägniermittel 2-Methoxy-methylethoxy-propanol aufweist.

Es konnte in überraschender Weise gezeigt werden, dass Paneele aus derartigen Rohpaneelen besonders guten Feuchtigkeitsschutz bieten. Insbesondere kann durch die Kombination der Fase mit dem Imprägnieren der Fase und der Paneelkante erreicht werden, dass die Imprägnierung der Paneelkante mit einer späteren Oberflächenveredelung, wie beispielsweise eine Dekorschicht oder einer Verschleißschicht, überlappen kann. Somit kann erreicht werden, dass keine Feuchtigkeit zwischen feuchtigkeitsschützenden Schichten hindurch in die Paneelkante eindringt. Durch das Ausbilden einer Fase und die Imprägnierung der Fase kann zudem erreicht werden, dass Feuchtigkeit bereits von der Fase nicht aufgenommen wird und sich somit in einer gebildeten Fuge sammelt, statt wie durch eine Kapillare in die Fuge gezogen zu werden.

Unter dem Begriff "Paneel" sind im Sinne der Erfindung insbesondere Wand-, Decken, Tür- oder Bodenpaneele zu verstehen. Diese können ein auf eine Trägerplattenkern aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Unter dem Begriff "Paneelkante" ist im Sinne der Erfindung die Oberfläche zu verstehen, welche die Paneeloberseite mit der Paneelunterseite verbindet.

Unter dem Begriff "Trägerplattenkern" ist im Sinn der Erfindung zu verstehen, dass der Kern des Rohpaneels im Wesentlichen aus einer Trägerplatte besteht. In Anhängigkeit des gewünschten Einsatzbereiches der Paneele können Trägerplatten aus unterschiedlichen Materialen gefertigt sein. Insbesondere kann dabei das Material der Trägerplatte in Abhängigkeit des Einsatzbereichs gewählt sein. So kann die Trägerplatte beispielsweise aus einem Holzwerkstoff bestehen, sofern das Paneele keiner übermäßigen Feuchtigkeit oder Witterungsbedingungen ausgesetzt ist. Soll das Paneel hingegen z.B. in Feuchträumen oder im Außenbereich eingesetzt werden, kann die Trägerplatte beispielsweise aus einem Kunststoff bestehen. Da die vorliegende Erfindung das Versiegeln von Paneelkanten betrifft, ist die Erfindung für wasserempfindliche Trägerplatten, wie Trägerplatten aus einem Holzwerkstoff, besonders vorteilhaft.

Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Untereiner "Druckuntergrundschicht" ist im Sinne der Erfindung eine Schicht zu verstehen, die sich zum Bedrucken eignet.

Unter einer "Fase" ist im Sinne der vorliegenden Erfindung die Fläche zu verstehen, die bei einer Abschrägung einer Kante von zwei aneinander angrenzenden Flächen entsteht und die beiden Flächen miteinander verbindet.

Ein vorbeschriebenes Verfahren dient somit insbesondere der Herstellung von Rohpaneelen mit versiegelter Paneelkante. Derartige Rohpaneele lassen sich mit bekannten Methoden zu entsprechenden Paneelen, insbesondere zu Dekorpaneelen, weiterverarbeiten.

Bevorzugt kann vorgesehen sein, dass das Bereitstellen eines Rohpaneels die Verfahrensschritte umfasst:
d) Bereitstellen einer Trägerplatte,
e) Aufbringen einer Druckuntergrundschicht auf eine Oberseite der Trägerplatte unter Ausbildung eines Schichtstapels,
f) Verpressen des in Schritt e) erhaltenen Schichtstapels zu einer mehrschichtigen Platte unter Ausbildung einer nicht zerstörungsfrei ablösbaren Verbindung zwischen Trägerplatte und Druckuntergrundschicht,
g) Aufteilen der in Schritt f) erhaltenen mehrschichtigen Platte in Rohpaneele umfassend die Paneeloberseite, die Paneelunterseite und das zumindest eine Paar sich gegenüberliegender Paneelkanten,

Dadurch kann vorteilhafter Weise ein Rohpaneel bereitgestellt werden, dessen Paneelkante besonders gut mit dem vorbeschriebenen Verfahren versiegelt werden kann. Insbesondere kann dabei vorteilhafter Weise vorgesehen sein, dass die Verfahrensschritte d) bis g) zusammen mit den Verfahrensschritten a) bis c) in einem kontinuierlichen Prozess durchgeführt werden. Somit können die Paneelkanten direkt nach deren Herstellung Versiegelt werden. Dadurch kann erreicht werden, dass die Rohpaneele bereits als Halbzeug gut lagerbar sind. Es kann somit insbesondere erreicht werden, dass die Lagerung der erhaltenen Rohpaneele keine besonders hohen Anforderungen an Feuchtigkeit bedarf.

Unter einer Trägerplatte kann im Sinne der Erfindung insbesondere eine Großplatte oder ein bahnartiger Träger verstanden werden. Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann. Unter einer "Großplatte" kann dabei ferner im Sinne der vorliegenden Erfindung ein Träger verstanden werden, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Das Verpressen kann vorteilhafter Weise ein Verpressen mit einer Kurztaktpresse, einer Bandpresse oder einem Kalander sein.

Das Aufteilen der mehrschichtigen Platte kann im Sinne der Erfindung insbesondere eine Vereinzelung der mehrschichtige Platte in eine Mehrzahl von Paneelen verstanden werden. Unter einer Vereinzelung ist dabei insbesondere ein Schneiden entlang einer Längsrichtung der mehrschichtigen Platte zu verstehen. Beispielsweise kann darunter bei einem kontinuierlichen Prozess, insbesondere bei einem Endlosprozess, ein Schneiden entlang einer Förderrichtung des Trägers verstanden werden.

Bevorzugt kann vorgesehen sein, dass das Aufbringen der Druckuntergrundschicht vorzugsweise zumindest ein Aufbringen einer ersten Melaminharzschicht auf die Trägerplatte und ein Aufbringen einer Faserschicht auf die erste Melaminharzschicht umfasst, und optional ein Aufbringen einer zweiten Melaminharzschicht auf die Faserschicht.

Dadurch kann vorteilhafter Weise erreicht werden, dass die Druckuntergrundschicht besonders gut mit dem Träger verbunden werden kann und ein aufgedrucktes Dekor besonders gut auf der Druckuntergrundschicht haftet.

Unter dem Begriff "Melaminharzschicht" ist im Sinne der Erfindung eine Schicht zu verstehen, die ein Melaminharz aufweist, vorzugsweise im Wesentlichen aus einem Melaminharz besteht. Unter Melaminharz ist dabei das Kondensationsprodukt von Melamin und Formaldehyd zu verstehen. Darunter sind auch modifizierte Melaminharze zu verstehen. Beispielsweise kann die Melaminharzschicht harnstoffmodifiziertes Melaminharz aufweisen, also das Kondensationsprodukt aus Melamin, Harnstoff und Formaldehyd.

Unter einer Faserschicht ist eine Schicht aus einem Faserwerkstoff zu verstehen. Im Sinne der Erfindung sind unter dem Begriff Faserwerkstoffe Materialien wie z.B. Papier und Vliese auf Basis pflanzlicher, tierischer, mineralischer oder auch künstlicher Fasern zu verstehen, ebenso wie Pappen. Beispiele für Faserwerkstoffe aus pflanzlichen Fasern sind neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind Mineralwolle oder Glaswolle. Besonders bevorzugt kann die Faserschicht eine Papierschicht sein.

Bevorzugt kann vorgesehen sein, dass nach dem Versiegeln das Verfahren eine Oberflächenveredelung umfasst, umfassend die Verfahrensschritte:
h) Bedrucken der Paneeloberseite mit einem Dekor,
i) Aufbringen einer lackhaltigen Deckschicht auf die Paneeloberseite, und
j) Optional Strukturieren der lackhaltigen Deckschicht,
wobei die Oberflächenveredelung optional auch die Fase umfasst.

Dadurch kann vorteilhafter Weise das Rohpaneel zu einem Paneel verarbeitet werden. Insbesondere kann dadurch vorteilhafter Weise erreicht werden, dass die Oberfläche entsprechend der gewünschten Anwendung des Paneels angepasst wird. Die lackhaltige Deckschicht kann vorteilhafter Weise zumindest an die versiegelte Paneelkante angrenzen und somit auch ein Eindringen von Feuchtigkeit von Oben hinter die Versiegelung verringern.

Das Bedrucken der Paneeloberseite kann bevorzugt ein Direktdruck sein.

Unter dem Begriff "Direktdruck" wird im Sinne der Erfindung das Aufbringen eines Dekors direkt auf die Paneeloberfläche verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Oberflächenbeschichtung bzw. der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldruckverfahren, wie beispielsweise Inkjet-Verfahren oder Laserdruck-Verfahren eingesetzt werden. Unter dem Begriff "Digitaldruckverfahren" ist im Sinne der Erfindung ein computergesteuertes Direktdruckverfahren zu verstehen.

Alternativ ist es im Sinne der vorliegenden Erfindung nicht ausgeschlossen, dass das Dekor derart aufgebracht ist, dass beispielsweise eine bereits bedruckte Faserschicht, wie beispielsweise eine Papierschicht, oder auch eine bereits bedruckte Folie, wie beispielsweise aus Polyethylen, Polypropylen oder Polyvinylchlorid, auf den Träger aufgebracht wird.

Unter einer Deckschicht ist im Sinne der Erfindung eine Schicht zu verstehen, die im Wesentlichen zu Schutz der Oberfläche dient. Beispielsweise kann die Deckschicht auch eine Verschleißschutzschicht sein.

In einer Ausgestaltung kann vorgesehen sein, dass vor dem Bedrucken der Paneeloberseite mit einem Dekor eine Harzzusammensetzung, vorzugsweise ein Melaminharz, aufweisend Feststoffe und/oder Pigment auf die Druckuntergrundschicht aufgebracht wird. Bevorzugt weist die Harzschicht Feststoffe und/oder Pigmente mit einem Korndurchmesser d₅₀ zwischen ≥0,1µm und ≤120µm, vorzugsweise zwischen ≥1µm und ≤100µm, in einem Bereich von ≥5 Gew.-% bis ≤ 85 Gew.-%, vorzugsweise von ≥10 Gew.-% bis ≤ 80 Gew.-%, noch bevorzugter zwischen ≥35 Gew.-% und ≤ 75 Gew.-% auf. Die Feststoffe können bevorzugt ausgewählt sein aus der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, oder Mischungen davon. Die Pigmente können bevorzugt ausgewählt sein der Gruppe bestehend aus Berlinerblau, Brillantgelb, Cadmiumgelb, Cadmiumrot, Chromoxidgrün, Cobaltblau, Cobaltcölinblau, Cobaltviolett, Irgazinrot, Eisenoxidschwarz, Manganviolett, Phthalocyaninblau, Terra di Siena, Titanweiß, Ultramarinblau, Ultramarinrot, Umbra, Kaolin, Zirkonium-Silicat-Pigmente, Monoazogelb und Monoazoorange, Thioindigo, beta-Naphthol-Pigmente, Naphthol AS-Pigmente, Pyrazolon-Pigmente, N-Acetessigsäureanilid-Pigmente, Azometallkomplex-Pigmente, Diaryl-Gelb-Pigmente, Chinacridon-Pigmente, Diketopyrrolopyrrol-Pigmente (DPP), Dioxazin-Pigmente, Perylen-Pigmente, Isoindolinon-Pigmente, Kupfer-Phthalocyanin-Pigmente und Mischungen davon.

Durch die Verwendung solcher Feststoffe kann insbesondere ein farbiger Druckuntergrund bereitgestellt werden, dessen Farbgebung eine den Dekordruck unterstützende Eigenschaft aufweist. So kann beispielsweise bei einer Dekorgestaltung, welche eine dunkle Holzart repräsentieren soll ein Druckuntergrund mit einem braunen oder bräunlichen Grundton aufgebracht werden, während bei einer Dekorgestaltung, welche eine helle Holzart oder einen hellen Stein repräsentieren soll ein Druckuntergrund mit einem gelben oder weißen Grundton aufgebracht werden

Unter dem Begriff "lackhaltige Deckschicht" ist im Sinne der Erfindung eine Schicht zu verstehen, die einen Decklack aufweist, vorzugsweise im Wesentlichen aus einem Decklack besteht.

Das Aufbringen der lackhaltigen Deckschicht kann auch ein Aufbringen mehrerer Deckschichten umfassen.

Bevorzugt kann vorgesehen sein, dass die lackhaltige Deckschicht nach dem Aufbringen gehärtet wird, vorzugsweise strahlungsgehärtet, besonders bevorzugt strahlungsgehärtet mit UV-Strahlung mit einer Wellenlänge in einem Bereich von ≥ 10 nm bis ≤ 450 nm. Bei der Härtung kann es sich um eine vollständige Härtung oder um eine Teilhärtung handeln. Bevorzugt kann vorgesehen sein, dass die lackhaltige Deckschicht einen acrylatbasierten Lack aufweist, insbesondere einen polyurethanmodifizierten acrylatbasierten Lack. Dadurch kann erreicht werden, dass die lackhaltige Deckschicht einfach gehärtet und gut strukturiert werden kann.

Bevorzugt kann vorgesehen sein, dass die lackhaltige Deckschicht Hartstoffe aufweist, vorzugsweise in einer Menge zwischen 5 Gew.-% und 40% Gew.-%, wobei die Hartstoffe vorzugsweise einen Korndurchmesser d₅₀ zwischen 10 µm und 250 µm aufweisen.

Zur Bestimmung des Korndurchmessers kann auf die allgemein bekannten Verfahren, wie beispielsweise die Laserdiffraktometrie, zurückgegriffen werden. Damit können Korndurchmesser im Bereich von einigen Nanometern bis hin zu mehreren Millimetern bestimmt werden können. Mittels dieser Methode lassen sich auch d₅₀ bzw. d₉₈ Werte ermitteln, welche jeweils aussagen, dass 50% (d₅₀) bzw. 98% (d₉₈) der gemessenen Körner kleiner sind als der jeweils angegebene Wert. Auch diese Werte lassen sich bevorzugt mittels Laserdiffraktometrie bestimmen. Im Falle der Abweichung der mittels unterschiedlicher Messverfahren erhaltenen Messwerte wird seitens des Anmelders der mittels Laserdiffraktometrie ermittelte Wert als maßgeblich angesehen.

Unter dem Begriff "Hartstoffe" werden im Sinne der Erfindung Stoffe verstanden, die eine ausreichende Härte aufweisen. Beispielsweise können die Hartstoffe eine Härte nach Mohs von wenigstens ≥ 8, vorzugsweise wenigstens ≥ 9 aufweisen. Beispiele für geeignete Hartstoffe sind Titannitrid, Titancarbid, Siliciumnitrid, Siliciumcarbid, Borcarbid, Wolframcarbid, Tantalcarbid, Aluminiumoxid (Korund), Zirconiumoxid, Zirconiumnitrid oder Mischungen dieser.

Dadurch wird vorteilhafter Weise erreicht, dass die lackhaltige Deckschicht besonders abriebfest sein kann. Hartstoffe in der lackhaltigen Deckschicht ermöglichen dabei einen Abriebschutz über die gesamte Fläche der lackhaltigen Deckschicht.

Bevorzugt kann vorgesehen sein, dass die lackhaltige Deckschicht strukturiert wird. Unter strukturieren ist im Sinne der Erfindung das Erzeugen einer haptisch wahrnehmbaren Strukturierung zu verstehen.

Es kann vorgesehen sein, dass die Strukturierung einem einfachen Muster folgt. Alternativ kann vorgesehen sein, dass die Strukturierung zumindest teilweise synchron zu dem Dekor ausgebildet ist. Bevorzugt kann also vorgesehen sein, dass das Strukturieren der Oberfläche ein Ausbilden einer zumindest teilweise zum Dekor synchronen Strukturierung umfasst.

Unter einer synchronen Strukturierung ist zu verstehen, dass die Strukturierung in ihrer Form und ihrem Muster dem aufgebrachten Dekor angepasst ist, um eine möglichst originalgetreue Nachbildung, beispielsweise eines natürlichen Werkstoffes, auch hinsichtlich der Haptik zu erhalten. Bevorzugt kann vorgesehen sein, dass die Strukturierung vorlagenidentisch zu der dreidimensionalen Struktur einer Vorlage ist.

Bei dem Strukturieren der lackhaltigen Deckschicht kann die Struktur durch Prägewerkzeuge direkt in die aufgebrachte Lackschicht eingebracht werden. Die Struktur kann auch bevorzugt durch ein Digitaldruckverfahren erzeugt werden.

Besonders bevorzugt kann vorgesehen sein, dass die Oberflächenveredelung auch die Fase umfasst.

Darunter, dass die Oberflächenveredelung auch die Fase umfasst ist zu verstehen, dass die vorbeschriebenen Verfahrensschritte über die Paneeloberseite hinaus auch auf die Fase angewendet werden. Die Fase kann also mit einem Dekor bedruckt werden und mit einer lackhaltigen Deckschicht versehen werden, die optional strukturiert werden kann.

Dadurch kann ganz besonders bevorzugt eine Abdichtung zwischen der Druckuntergrundschicht und dem Trägerplattenkern erreicht werden. Die Oberflächenveredelung kann dabei auf der Fase direkt mit dem imprägnierten Trägerplattenkern verbunden werden. Eine an der Fase offen liegende Schichtgrenze zwischen Trägerplattenkern und Druckuntergrundschicht kann dadurch mit dem Dekor und mit der lackhaltigen Deckschicht überzogen werden.

In einer Ausgestaltung kann vorgesehen sein, dass vor dem Verpressen ein Gegenzugpapiers auf die Rückseite der Trägerplatte aufgebracht wird.

Dadurch kann vorteilhafter Weise erreicht werden, dass kein Spannungsungleichgewicht zwischen Paneeloberseite und Paneelunterseite erzeugt wird. Somit kann ein ungewolltes Verziehen des Paneels verhindert werden.

Bevorzugt kann vorgesehen sein, dass das Rohpaneel zwei Paare sich gegenüberliegender Paneelkanten aufweist. Es kann bevorzugt vorgesehen sein, dass an jeder Paneelkante eine Fase ausgebildet wird. Ferner kann bevorzugt vorgesehen sein, dass jede Paneelkante versiegelt wird.

Dadurch kann erreicht werden, dass das Paneel umlaufend versiegelt ist.

Bevorzugt kann vorgesehen sein, dass das Imprägniermittel auf die zumindest eine Paneelkante und auf die Fase in aneinander angrenzenden Bereichen aufgetragen wird.

Dadurch kann vorteilhafter Weise erreicht werden, dass der Übergang zwischen einer bei verlegten Paneelen freiliegenden Fläche der Fase zu den nicht freiliegenden Flächen der Paneelkante durchgängig imprägniert ist. Somit kann vorteilhafter Weise erreicht werden, dass an diesem Übergang das Paneel besonders gut vor Feuchtigkeit geschützt ist.

Bevorzugt kann vorgesehen sein, dass vor dem Versiegeln das Paar sich gegenüberliegender Paneelkanten unter Ausbildung komplementärer Halteprofile profiliert wird.

Unter dem Begriff "Halteprofil" ist die geometrische Ausgestaltung der Paneelkante zu verstehen. Dabei werden unter dem Begriff auch mehrteilige Halteprofile verstanden.

Unter dem Begriff "komplementäres Halteprofil" ist ein Halteprofil zu verstehen, dessen geometrische Ausgestaltung die eines anderen Halteprofils im Wesentlichen ergänzt. Also ein Halteprofil, das im Wesentlichen dort eine Feder aufweist, wo das andere Halteprofil eine Nut aufweist und umgekehrt. Zwei komplementäre Halteprofile sind deswegen formschlüssig aneinander befestigbar. Dabei können Hohlräume zwischen den komplementären Halteprofilen verbleiben. Beispielsweise kann ein Halteprofil eine Nut aufweisen und ein komplementäres Halteprofil einen Spund, oder ein Halteprofil kann einen Haken aufweisen und ein komplementäres Halteprofil eine entsprechende Unterschneidung, oder beide Halteprofile weisen Haken und Unterschneidungen auf. Ineinandergreifende Nuten und Spunde, die in einem befestigten Zustand zweier komplementärer Halteprofile aneinander anliegen sind im Sinne der Erfindung unter dem Begriff "Sperrnut" zu verstehen.

Dadurch kann vorteilhafter Weise erreicht werden, dass die Paneele besonders einfach verlegt werden können. Indem die Halteprofile vor dem Versiegeln ausgebildet werden, kann vorteilhafter weise erreicht werden, dass beim Versiegeln der Paneelkante die Halteprofile versiegelt werden. Durch das versiegeln der Halteprofile kann erreicht werden, dass auch diese vor Feuchtigkeit geschützt sind. Halteprofile sind üblicherweise besonders anfällig für Feuchtigkeit, da bereits geringe Formveränderungen dazu führen können, dass die Halteprofile nicht mehr richtig ineinandergreifen.

Bevorzugt kann vorgesehen sein, dass das Imprägniermittel in einem Bereich auf die zumindest eine Paneelkante aufgetragen wird, in dem das komplementäre Halteprofil mit dem komplementären Halteprofil einer gegenüberliegenden Paneelkante eine Sperrnut ausbildet, wobei das Imprägniermittel vorzugsweise auch auf die andere Paneelkante des Paars sich gegenüberliegender Paneelkanten in diesem Bereich aufgetragen wird.

Dadurch kann vorteilhafter Weise erreicht werden, dass die Versiegelung durch die eng aneinander liegenden Flächen der Halteprofile eine Sperre ausbildet. Feuchtigkeit kann dadurch vorteilhafter Weise nicht in die Paneelkanten eindringen und wird zusätzlich auch von einem Durchdringen durch die Fuge zweier aneinander angebrachten Paneele abgehalten.

Bevorzugt kann vorgesehen sein, dass das Imprägniermittel auf die Fase und/oder auf die Paneelkante flächendeckend aufgetragen wird.

Dadurch kann vorteilhafter Weise erreicht werden, dass die Versiegelung der Paneelkante besonders effektiv ist.

Erfindungsgemäß weist das Imprägniermittel 2-Methoxy-methylethoxy-propanol auf.

Es hat sich überraschender Weise herausgestellt, dass diese Imprägniermittel besonders gut zum Versiegeln der Paneelkanten geeignet sind. Vorteilhafter weise kann durch diese Imprägniermittel erreicht werden, dass das Imprägniermittel zumindest teilweise in die Paneelkante einzieht. Somit kann verhindert werden, dass die Versiegelung leicht wieder abgetragen wird. Zudem sind diese Imprägniermittel besonders geruchsneutral, weswegen sich derartige Paneele besonders gut in Wohnräumen einsetzen lassen. Ferner hat sich herausgestellt, dass derartige Imprägniermittel auch bei Wärme nicht leicht verdampfen, so dass die Versiegelung beispielsweise auch bei Sonneneinstrahlung langlebig ist.

Ferner hat sich überraschender Weise gezeigt, dass das vorbeschriebene Imprägniermittel eine nachfolgende Oberflächenveredelung nicht nachträglich beeinträchtigt. Beispielsweise beeinträchtigen die Imprägniermittel die Haftung des Dekors oder der lackhaltigen Deckschicht auf der Fase nicht.

Bevorzugt kann vorgesehen sein, dass das Imprägniermittel 2-Methoxy-methylethoxy-propanol aufweist in einer Menge aufweist bezogen auf das Imprägniermittel in einem Bereich von größer oder gleich 1 Gew.-% bis kleiner oder gleich 20 Gew.-%, vorzugsweise größer oder gleich 2,5 Gew.-% bis kleiner oder gleich 10 Gew.-%.

Dadurch kann erreicht werden, dass das Imprägniermittel besonders gleichmäßig aufgetragen werden kann.

Bevorzugt kann vorgesehen sein, dass das Imprägniermittel ein Lösemittel aufweist, wobei das Lösemittel vorzugsweise im Wesentlichen aus C11-C13 Isoalkanen bestehet.

Dadurch kann vorteilhafter Weise erreicht werden, dass die Auftragung des Imprägniermittels technisch besonders einfach umgesetzt werden kann. Beispielsweise lässt sich dadurch erreichten, dass das Imprägniermittel auf den zu imprägnierenden Bereich gesprüht werden kann. Zudem sind derartige Lösemittel vorteilhafter Weise besonders Geruchsneutral.

Bevorzugt kann vorgesehen sein, dass das Imprägniermittel einen Farbstoff aufweist.

Dadurch kann vorteilhafter Weise erreicht werden, dass die korrekte Auftragung des Imprägniermittels einfach überprüft werden kann.

Bevorzugt kann vorgesehen sein, dass das Versiegeln der zumindest einen Paneelkante ein Lackieren der Fase mit einem Versiegelungslack umfasst.

Dadurch kann vorteilhafter Weise erreicht werden, dass eine zusätzliche Versiegelung der Fase erreicht wird. Insbesondere kann dadurch erreicht werden, dass die Imprägnierung der Fase besonders langlebig ist. Durch den Versiegelungslack kann dabei verhindert werden, dass die Imprägnierung mit der Zeit über die Fase abdampft.

Bevorzugt kann vorgesehen sein, dass der Versiegelungslack nach dem Aufbringen gehärtet wird, vorzugsweise strahlungsgehärtet, besonders bevorzugt strahlungsgehärtet mit UV-Strahlung mit einer Wellenlänge in einem Bereich von ≥ 10 nm bis ≤ 450 nm.

Dadurch kann vorteilhafter Weise erreicht werden, dass sich der Versiegelungslack besonders präzise auftragen lässt und dass der Versiegelungslack besonders stabil ist.

Es kann vorgesehen sein, dass die Härtung in einem ersten Härtungsschritt mit UV-Strahlung mit einer Wellenlänge in einem Bereich von ≥ 315 nm bis ≤ 450 nm, vorzugsweise ≥ 380 nm bis ≤ 410 nm, durchgeführt und in einem zweiten Härtungsschritt mit UV-Strahlung mit einer Wellenlänge in einem Bereich von ≥ 10 nm bis ≤ 250 nm, vorzugsweise von ≥ 170 nm bis ≤ 225 nm durchgeführt wird.

Bevorzugt kann vorgesehen sein, dass der Versiegelungslack einen acrylatbasierten Lack aufweist, insbesondere einen polyurethanmodifizierten acrylatbasierten Lack.

Dadurch kann vorteilhafter Weise erreicht werden, dass der Versiegelungslack leicht aufgetragen werden kann und eine gute mechanische Festigkeit aufweist.

Bevorzugt kann vorgesehen sein, dass der Versiegelungslack zumindest Teilweise auf das Imprägniermittel aufgetragen wird.

Dadurch kann eine Überlappung zwischen Versiegelungslack und Imprägniermittel erreicht werden, wodurch die Versiegelung besonders dicht sein kann.

Der Versiegelungslack kann mit üblichen Methoden aufgebracht werden. Bevorzugt kann vorgesehen sein, dass der Versiegelungslack mit einem Druckverfahren aufgebracht wird.

Dadurch kann erreicht werden, dass der Versiegelungslack besonders präzise aufgebracht werden kann.

Mit der Erfindung wird zudem ein Rohpaneel mit versiegelter Paneelkante hergestellt nach dem vorbeschriebenen Verfahren vorgeschlagen. Das Rohpaneel umfasst eine Paneeloberseite und eine Paneelunterseite sowie zumindest ein Paar sich gegenüberliegender Paneelkanten, wobei das Rohpaneel einen Trägerplattenkern und eine auf die Paneeloberseite aufgebrachte Druckuntergrundschicht aufweist, wobei das Rohpaneel zwischen zumindest einer Paneelkante des Paars sich gegenüberliegender Paneelkanten und der Paneeloberseite eine Fase aufweist und die zumindest eine Paneelkante eine Versiegelung aufweist, wobei die zumindest eine Paneelkante und die Fase ein Imprägniermittel aufweisen.

Die vorbeschriebenen Rohpaneele sind vorteilhafter Weise an der Paneelkante besonders gut gegen das Eindringen von Feuchtigkeit geschützt. Somit können die Rohpaneele ohne besonders hohe Anforderungen als Halbzeug gelagert werden. Die Rohpaneele können dann zu gegebener Zeit zu Paneelen weiterverarbeitet werden.

Bevorzugt kann vorgesehen sein, dass das Paar sich gegenüberliegender Paneelkanten komplementäre Halteprofile aufweist.

Dadurch können die Rohpaneele einfach zu Paneelen mit komplementären Halteprofilen weiterverarbeitet werden.

Mit der Erfindung wird zudem ein Paneel aufweisend ein vorbeschriebenes Rohpaneel mit versiegelter Paneelkante vorgeschlagen.

Derartige Paneele können vorteilhafter Weise auch gut feucht gereinigt werden, wobei die Gefahr eines Aufquellens der Paneele verringert ist. Somit können auch für Anwendungen in denen hohe Anforderungen an die Resistenz gegen Feuchtigkeit an Paneele gestellt werden Paneele verwendet werden, die ein aufquellbares Trägermaterial aufweisen, wie beispielsweise Paneele mit einem Trägerplattenkern aus eine Holzwerkstoff. Es können also beispielsweise nachwachsende Trägermaterialien auch für feuchtere Räume verwendet werden, wodurch sich eine erhöhte Umweltfreundlichkeit ergibt.

Mit der Erfindung wird zudem eine Anordnung eines Paneels umfassend das vorbeschriebene Rohpaneel mit einer Sockelleiste vorgeschlagen. Die Sockelleiste weist eine Dekorseite und zumindest eine an die Dekorseite angrenzende Sockelleistenkante, wobei die Sockelleiste einen Trägerplattenkern und eine auf die Dekorseite aufgebrachte Druckuntergrundschicht aufweist und wobei die Sockelleistenkante das Imprägniermittel aufweist.

Die Sockelleistenkante kann bevorzugt wie die zumindest eine Paneelkante wie vorbeschrieben versiegelt werden.

Dadurch kann vorteilhafter Weise erreicht werden, dass verlegte Paneele, dessen Paneelkanten nicht an der Paneelkante eines benachbarten Paneels anliegen auch gut gegen das Eindringen von Feuchtigkeit geschützt sind.

Die Erfindung ist nachfolgend anhand der Figuren weiter erläutert. Die Figuren zeigen mögliche Ausgestaltungen der Erfindung. Prinzipiell sind jedoch auch Kombinationen oder Abwandlungen der Ausgestaltungen im Rahmen der Erfindung möglich.

Fig. 1A, 1B, 1C und 1D zeigen schematisch einen Ausschnitt des Querschnitts eines Rohpaneels nach verschiedenen Verfahrensschritten gemäß einer Ausgestaltung des Verfahrens.

Fig. 2 zeigt schematisch den Querschnitt zweier ineinandergefügten Paneele mit komplementären Halteprofilen gemäß einer Ausgestaltung des Rohpaneel.

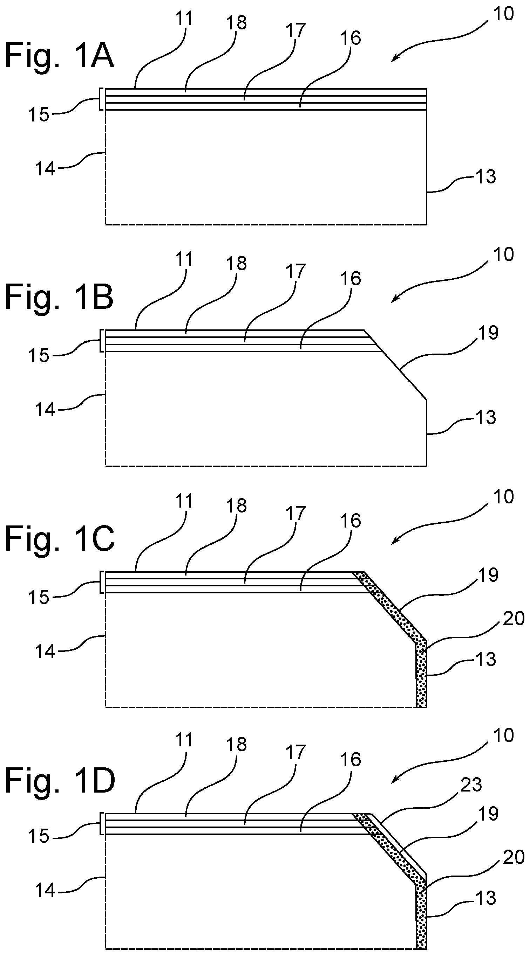

Fig. 1A zeigt schematisch einen Ausschnitt des Querschnitts eines Rohpaneels 10 welches zur Durchführung des Verfahrens gemäß einer Ausgestaltung bereitgestellt wurde. Das Rohpaneel 10 weist eine Paneeloberseite 11 und eine Paneelunterseite 12 auf (nicht gezeigt) und ein Paar sich gegenüberliegender Paneelkanten 13 (eine nicht gezeigt). Das Rohpaneel 10 weist einen Trägerplattenkern 14 auf und eine auf die Paneeloberseite 11 aufgebrachte Druckuntergrundschicht 15. Die Druckuntergrundschicht 15 in der Ausgestaltung in Figur 1A weist drei Schichten auf, die durch Aufbringen einer ersten Melaminharzschicht 16 auf die Trägerplatte, Aufbringen einer Papierschicht 17 auf die erste Melaminharzschicht 16 und Aufbringen einer zweiten Melaminharzschicht 18 auf die Papierschicht 17 erhalten wurde.

Fig. 1B zeigt schematisch den Ausschnitt des Querschnitts des Rohpaneels 10 aus Fig. 1A, wobei eine Fase 19 zwischen einer Paneelkante 13 des Paars sich gegenüberliegender Paneelkanten und der Paneeloberseite 11 ausgebildet wurde. Die Fase 19 wurde beispielsweise durch Fräsen der Ecke zwischen Paneelkante 13 und Paneeloberseite 11 erhalten.

Fig. 1C zeigt schematisch den Ausschnitt des Querschnitts des Rohpaneels 10 aus Fig. 1B, wobei die Paneelkante 13 versiegelt wurde. Es wurde ein Imprägniermittel 20 auf die Paneelkante 13 und die Fase 19 aufgetragen. Bei dem Imprägniermittel 20 handelte es sich um eine Lösung von 7 Gew.-% 2-Methoxy-methylethoxy-propanol in C11-C13 Isoalkanen, die auf die Fase 19 und die Paneelkante 13 aufgesprüht wurde. Das Imprägniermittel ist dabei in das Rohpaneel 10 an den Stellen, an denen es aufgetragen wurde, eingezogen.

Fig. 1D zeigt schematisch den Ausschnitt des Querschnitts des Rohpaneels 10 aus Fig. 1C, wobei die Paneelkante 13 zusätzlich versiegelt wurde, indem die Fase 19 mit einem Versiegelungslack 23 lackiert wurde. Der Versiegelungslack war ein polyurethanmodifizierten acrylatbasierten Lack, der bei einer Wellenlänge in einem Bereich von ≥ 10 nm bis ≤ 450 nm zumindest teilweise gehärtet wurde.

Im Ergebnis wurde ein Rohpaneel 10 mit versiegelten Paneelkanten 13 erhalten.

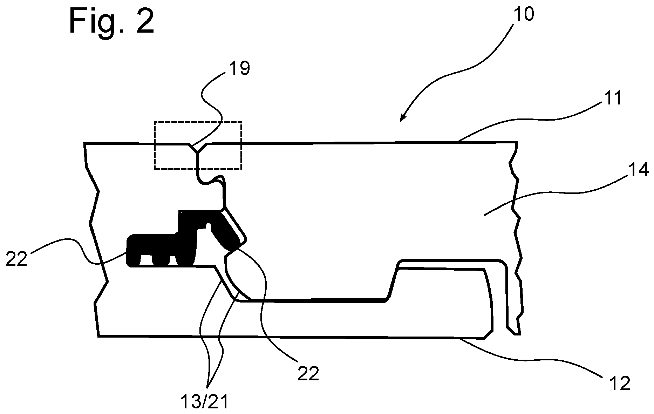

Fig. 2 zeigt schematisch den Querschnitt zweier ineinandergefügten Paneele 10 mit komplementären Halteprofilen 21 gemäß einer Ausgestaltung des Rohpaneels 10. Der gestrichelte Kasten zeigt Beispielhaft den in den Figuren 1A bis 1D dargestellten Ausschnitt. Die Paneele 10 weisen eine Paneeloberseite 11 und eine Paneelunterseite 12 auf und ein Paar sich gegenüberliegender Paneelkanten 13 (jeweils eine gezeigt) auf. Das Rohpaneel 10 weist einen Trägerplattenkern 14 auf und eine auf die Paneeloberseite 11 aufgebrachte Druckuntergrundschicht 15 (nicht gezeigt). Vor dem Versiegeln wurden die Paneele 10 mit komplementären Halteprofilen 21 und einer Fase 19 versehen. Die komplementären Halteprofile 21 bilden mit gegenüberliegenden Paneelkanten 13 Sperrnute 22. Beim Versiegeln wird das Imprägniermittel auch in dem Bereich der Sperrnute aufgetragen.

### Bezugszeichen:

- 10: Rohpaneel
- 11: Paneeloberseite
- 12: Paneelunterseite
- 13: Paneelkante
- 14: Trägerplattenkern
- 15: Druckuntergrundschicht
- 16: erste Melaminharzschicht
- 17: Papierschicht
- 18: zweite Melaminharzschicht
- 19: Fase
- 20: Imprägniermittel
- 21: komplementäre Halteprofile
- 22: Sperrnut
- 23: Versiegelungslack

## Patentansprüche

1. Verfahren zum Herstellen eines Paneels mit versiegelter Paneelkante, aufweisend zumindest die Verfahrensschritte:
a) Bereitstellen eines Rohpaneels (10) umfassend eine Paneeloberseite (11), eine Paneelunterseite (12) und zumindest ein Paar sich gegenüberliegender Paneelkanten (13), wobei das Rohpaneel (10) einen Trägerplattenkern (14) und eine auf die Paneeloberseite (11) aufgebrachte Druckuntergrundschicht (15) aufweist,
b) Ausbilden einer Fase (19) zwischen zumindest einer Paneelkante (13) des Paars sich gegenüberliegender Paneelkanten (13) und der Paneeloberseite (11),
c) Versiegeln der zumindest einen Paneelkante (13), wobei das Versiegeln ein Imprägnieren mit einem Imprägniermittel (20) umfasst, wobei das Imprägniermittel (20) auf die zumindest eine Paneelkante (13) und auf die Fase (19) aufgetragen wird,
**dadurch gekennzeichnet, dass**
das Imprägniermittel (20) 2-Methoxy-methylethoxy-propanol aufweist.

2. Verfahren zum Herstellen eines Paneels mit versiegelter Paneelkante nach Anspruch 1, wobei das Imprägniermittel (20) auf die zumindest eine Paneelkante (13) und auf die Fase (19) in aneinander angrenzenden Bereichen aufgetragen wird.

3. Verfahren zum Herstellen eines Paneels mit versiegelter Paneelkante nach einem der Ansprüche 1 oder 2, wobei vor dem Versiegeln das Paar sich gegenüberliegender Paneelkanten (13) unter Ausbildung komplementärer Halteprofile (21) profiliert wird.

4. Verfahren zum Herstellen eines Paneels mit versiegelter Paneelkante nach Anspruch 3, wobei das Imprägniermittel (20) in einem Bereich auf die zumindest eine Paneelkante (13) aufgetragen wird, in dem das komplementäre Halteprofil (21) mit dem komplementären Halteprofil (21) einer gegenüberliegenden Paneelkante (13) eine Sperrnut (22) ausbildet, wobei das Imprägniermittel (20) vorzugsweise auch auf die andere Paneelkante (13) des Paars sich gegenüberliegender Paneelkanten (13) in diesem Bereich aufgetragen wird.

5. Verfahren zum Herstellen eines Paneels mit versiegelter Paneelkante nach einem der Ansprüche 1 bis 4, wobei das Imprägniermittel (20) auf die Fase (19) und/oder auf die Paneelkante (13) flächendeckend aufgetragen wird.

6. Verfahren zum Herstellen eines Paneels mit versiegelter Paneelkante nach einem der Ansprüche 1 bis 6, wobei das Imprägniermittel (20) Dipropylenglycol-Alkylether in einer Menge aufweist bezogen auf das Imprägniermittel in einem Bereich von größer oder gleich 1 Gew.-% bis kleiner oder gleich 20 Gew.-%, vorzugsweise größer oder gleich 2,5 Gew.-% bis kleiner oder gleich 10 Gew.-%.

7. Verfahren zum Herstellen eines Paneels mit versiegelter Paneelkante nach einem der Ansprüche 1 bis 7, wobei das Imprägniermittel (20) ein Lösemittel aufweist, wobei das Lösemittel vorzugsweise im Wesentlichen aus C11-C13 Isoalkanen bestehet.

8. Verfahren zum Herstellen eines Paneels mit versiegelter Paneelkante nach einem der Ansprüche 1 bis 8, wobei das Imprägniermittel (20) einen Farbstoff aufweist.

9. Verfahren zum Herstellen eines Paneels mit versiegelter Paneelkante nach einem der Ansprüche 1 bis 8, wobei das Versiegeln der zumindest einen Paneelkante (13) ein Lackieren der Fase (19) mit einem Versiegelungslack (23) umfasst.

10. Verfahren zum Herstellen eines Paneels mit versiegelter Paneelkante nach Anspruch 10, wobei der Versiegelungslack (23) nach dem Aufbringen gehärtet wird, vorzugsweise strahlungsgehärtet, besonders bevorzugt strahlungsgehärtet mit UV-Strahlung mit einer Wellenlänge in einem Bereich von ≥ 10 nm bis ≤ 450 nm.

11. Verfahren zum Herstellen eines Paneels mit versiegelter Paneelkante nach einem der Ansprüche 10 oder 11, wobei der Versiegelungslack (23) einen acrylatbasierten Lack aufweist, insbesondere einen polyurethanmodifizierten acrylatbasierten Lack.

12. Verfahren zum Herstellen eines Paneels mit versiegelter Paneelkante nach einem der Ansprüche 10 bis 12, wobei der Versiegelungslack (23) zumindest Teilweise auf das Imprägniermittel (20) aufgetragen wird.

13. Rohpaneel (10) mit versiegelter Paneelkante hergestellt nach einem der Ansprüche 1 bis 12, umfassend eine Paneeloberseite (11) und eine Paneelunterseite (12) sowie zumindest ein Paar sich gegenüberliegender Paneelkanten (13), wobei das Rohpaneel (10) einen Trägerplattenkern (14) und eine auf die Paneeloberseite (11) aufgebrachte Druckuntergrundschicht (15) aufweist, wobei das Rohpaneel (10) zwischen zumindest einer Paneelkante (13) des Paars sich gegenüberliegender Paneelkanten (13) und der Paneeloberseite (11) eine Fase (19) aufweist und die zumindest eine Paneelkante eine Versiegelung aufweist, wobei die zumindest eine Paneelkante (13) und die Fase (19) ein Imprägniermittel (20) aufweisen, wobei das Imprägniermittel (20) 2-Methoxy-methylethoxy-propanol aufweist.

14. Rohpaneel (10) mit versiegelter Paneelkante nach Anspruch 13, wobei das Paar sich gegenüberliegender Paneelkanten (13) komplementäre Halteprofile (21) aufweist.

15. Anordnung eines Paneels umfassend das Rohpaneel (10) nach einem der Ansprüche 13 oder 14 mit einer Sockelleiste, wobei die Sockelleiste eine Dekorseite und zumindest eine an die Dekorseite angrenzende Sockelleistenkante aufweist, wobei die Sockelleiste einen Trägerplattenkern (14) und eine auf die Dekorseite aufgebrachte Druckuntergrundschicht (15) aufweist und wobei die Sockelleistenkante das Imprägniermittel (20) aufweist, wobei das Imprägniermittel (20) 2-Methoxy-methylethoxy-propanol aufweist.

## Claims

1. Method for producing a panel comprising a sealed panel edge, including at least the steps of:
a) providing a raw panel (10) comprising a panel upper face (11), a panel lower face (12) and at least one pair of opposing panel edges (13), wherein the raw panel (10) comprises a carrier plate core (14) and a print substrate layer (15) applied onto the panel upper face (11);
b) forming a chamfer (19) between at least one panel edge (13) of the pair of opposing panel edges (13) and the panel upper face (11),
c) sealing said at least one panel edge (13), wherein said sealing comprises impregnating with an impregnating agent (20), wherein said impregnating agent (20) is applied onto the at least one panel edge (13) and onto the chamfer (19), **characterized in that** the impregnating agent (20) comprises 2-methoxyethoxy-propanol.

2. Method for producing a panel comprising a sealed panel edge according to claim 1, wherein the impregnating agent (20) is applied onto the at least one panel edge (13) and onto the chamfer (19) areas adjacent each other.

3. Method for producing a panel comprising a sealed panel edge according to claim 1 or 2, wherein prior to sealing the pair of opposing panel edges (13) is profiled to form complementary retaining profiles (21).

4. Method for producing a panel comprising a sealed panel edge according to claim 3, wherein the impregnating agent (20) is applied onto the at least one panel edge (13) in an area in which the complementary retaining profile (21) forms a locking groove (22) together with the complementary retaining profile (21) of an opposing panel edge (13), wherein the impregnating agent (20) is preferably also applied onto the other panel edge (13) of the pair of opposing panel edges (13) in this area.

5. Method for producing a panel comprising a sealed panel edge according to any one of claims 1 to 4, wherein the impregnating agent (20) is applied onto the chamfer (19) and/or onto the panel edge (13) over the entire area.

6. Method for producing a panel comprising a sealed panel edge according to any one of claims 1 to 5, wherein the impregnating agent (20) comprises dipropylene glycol alkyl ether in an amount relative to the impregnating agent in a range from greater than or equal to 1 wt.-% to less than or equal to 20 wt.-%, preferably greater than or equal to 2.5 wt.-% to less than or equal to 10 wt.-%.

7. Method for producing a panel comprising a sealed panel edge according to any one of claims 1 to 6, wherein the impregnating agent (20) comprises a solvent, wherein the solvent preferably consists essentially of C11-C13 isoalkanes.

8. Method for producing a panel comprising a sealed panel edge according to any one of claims 1 to 7, wherein the impregnating agent (20) comprises a dye.

9. Method for producing a panel comprising a sealed panel edge according to any one of claims 1 to 8, wherein the sealing of the at least one panel edge (13) includes coating the chamfer (19) with a sealing lacquer (23).

10. Method for producing a panel comprising a sealed panel edge according to claim 9, wherein the sealing lacquer (23) is cured after application, preferably radiation-cured, particularly preferably radiation-cured with UV radiation having a wavelength in a range from ≥ 10 nm to ≤ 450 nm.

11. Method for producing a panel comprising a sealed panel edge according to claim 9 or 10, wherein the sealing lacquer (23) comprises an acrylate-based lacquer, in particular a polyurethane-modified acrylate-based lacquer.

12. Method for producing a panel comprising a sealed panel edge according to any one of claims 9 to 11, wherein the sealing lacquer (23) is applied at least partially onto the impregnating agent (20).

13. Raw panel (10) comprising a sealed panel edge produced according to any one of claims 1 to 13, comprising a panel upper face (11) and a panel lower face (12) and at least one pair of opposing panel edges (13), wherein the raw panel (10) comprises a carrier plate core (14) and a print substrate layer (15) applied onto the panel upper face (11), wherein the raw panel (10) comprises a chamfer (19) between at least one panel edge (13) of the pair of opposing panel edges (13) and the panel upper face (11), and wherein the at least one panel edge has a sealing, wherein the at least one panel edge (13) and the chamfer (19) comprise an impregnating agent (20), wherein the impregnating agent comprises 2-methoxyethoxy-propanol.

14. Raw panel (10) comprising a sealed panel edge according to claim 13, wherein the pair of opposing panel edges (13) comprise complementary retaining profiles (21).

15. Panel assembly comprising the raw panel (10) according to claim 14 or 15 comprising a baseboard, wherein the baseboard comprises a decorative side and at least one baseboard edge adjacent to the decorative side, wherein the baseboard comprises a carrier plate core (14) and a print substrate layer (15) applied onto the decorative side, and wherein the baseboard edge comprises the impregnating agent (20), wherein the impregnating agent comprises 2-methoxyethoxy-propanol.

## Revendications

1. Procédé de fabrication d'un panneau avec bord de panneau scellé, comprenant au moins les étapes de procédé suivantes :
a) fourniture d'un panneau brut (10) comprenant une face supérieure de panneau (11), une face inférieure de panneau (12) et au moins une paire de bords de panneau opposés (13), le panneau brut (10) présentant un noyau de plaque support (14) et une couche de fond d'impression (15) appliquée sur la face supérieure de panneau (11),
b) réalisation d'un chanfrein (19) entre au moins un bord de panneau (13) de la paire de bords de panneau opposés (13) et la face supérieure de panneau (11),
c) scellement dudit au moins un bord de panneau (13), ledit scellement comprenant une imprégnation avec un agent d'imprégnation (20), ledit agent d'imprégnation (20) étant appliqué sur ledit au moins un bord de panneau (13) et sur ledit chanfrein (19),
**caractérisé en ce que**
l'agent d'imprégnation (20) comprend du (2-méthoxyméthyléthoxy)propanol.

2. Procédé de fabrication d'un panneau avec bord de panneau scellé, selon la revendication 1 dans lequel l'agent d'imprégnation (20) est appliqué sur ledit au moins un bord de panneau (13) et sur le chanfrein (19) dans des zones adjacentes.

3. Procédé de fabrication d'un panneau avec bord de panneau scellé selon l'une des revendications 1 ou 2, dans lequel, avant le scellement, la paire de bords de panneau opposés (13) est profilée en formant des profils de retenue complémentaires (21).

4. Procédé de fabrication d'un panneau avec bord de panneau scellé selon la revendication 3, dans lequel l'agent d'imprégnation (20) est appliqué dans une zone d'au moins un bord de panneau (13), dans laquelle le profil de retenue complémentaire (21) forme une rainure de blocage (22) avec le profil de retenue complémentaire (21) d'un bord de panneau opposé (13), l'agent d'imprégnation (20) étant de préférence également appliqué sur l'autre bord de panneau (13) de la paire de bords de panneau opposés (13) dans cette zone.

5. Procédé de fabrication d'un panneau avec bord de panneau scellé selon l'une des revendications 1 à 4, dans lequel l'agent d'imprégnation (20) est appliqué sur le chanfrein (19) et/ou sur le bord de panneau (13) de manière à couvrir toute la surface.

6. Procédé de fabrication d'un panneau avec bord de panneau scellé selon l'une quelconque des revendications 1 à 6, dans lequel l'agent d'imprégnation (20) comprend un éther alkylique de dipropylène glycol en une quantité, par rapport à l'agent d'imprégnation, comprise entre une valeur supérieure ou égale à 1 % en poids et une valeur inférieure ou égale à 20 % en poids, de préférence une valeur supérieure ou égale à 2,5 % en poids et une valeur inférieure ou égale à 10 % en poids.

7. Procédé de fabrication d'un panneau avec bord de panneau scellé selon l'une quelconque des revendications 1 à 7, dans lequel l'agent d'imprégnation (20) comprend un solvant, ledit solvant étant de préférence essentiellement constitué d'isoalcanes en C11-C13.

8. Procédé de fabrication d'un panneau avec bord scellé selon l'une quelconque des revendications 1 à 8, dans lequel l'agent d'imprégnation (20) comprend un colorant.

9. Procédé de fabrication d'un panneau avec bord de panneau scellé selon l'une quelconque des revendications 1 à 8, dans lequel le scellement dudit au moins un bord de panneau (13) comprend la peinture du chanfrein (19) avec un vernis de scellement (23).

10. Procédé de fabrication d'un panneau avec bord de panneau scellé selon la revendication 10, dans lequel le vernis de scellement (23) est durci après l'application, de préférence durci par rayonnement, de manière particulièrement préférée durci par rayonnement avec un rayonnement UV ayant une longueur d'onde dans une plage de ≥ 10 nm à ≤ 450 nm.

11. Procédé de fabrication d'un panneau avec bord de panneau scellé selon l'une des revendications 10 ou 11, dans lequel le vernis de scellement (23) comprend un vernis à base d'acrylate, en particulier un vernis à base d'acrylate modifié par du polyuréthane.

12. Procédé de fabrication d'un panneau avec bord de panneau scellé selon l'une des revendications 10 à 12, dans lequel le vernis de scellement (23) est appliqué au moins en partie sur l'agent d'imprégnation (20).

13. Panneau brut (10) avec bord de panneau scellé, fabriqué selon l'une quelconque des revendications 1 à 12, comprenant une face supérieure de panneau (11) et une face inférieure de panneau (12) ainsi qu'au moins une paire de bords de panneau opposés (13), dans lequel le panneau brut (10) comprenant un noyau de plaque de support (14) et une couche de fond d'impression (15) appliquée sur la face supérieure de panneau (11), dans lequel le panneau brut (10) présente un chanfrein (19) entre au moins un bord de panneau (13) de la paire de bords de panneau opposés (13) et la face supérieure de panneau (11) et ledit au moins un bord de panneau présente un scellement, dans lequel ledit au moins un bord de panneau (13) et le chanfrein (19) présentent un agent d'imprégnation (20), dans lequel l'agent d'imprégnation (20) comprend du (2-méthoxyméthyléthoxy)propanol.

14. Panneau brut (10) avec bord de panneau scellé selon la revendication 13, dans lequel la paire de bords de panneau opposés (13) présente des profils de retenue complémentaires (21).

15. Agencement d'un panneau comprenant le panneau brut (10) selon l'une des revendications 13 ou 14 avec une plinthe, dans lequel la plinthe présentant un côté décoratif et au moins un bord de plinthe adjacent au côté décoratif, dans lequel la plinthe présentant un noyau de plaque de support (14) et une couche de fond d'impression (15) appliquée sur le côté décoratif et le bord de la plinthe présentant l'agent d'imprégnation (20), l'agent d'imprégnation (20) comprenant du (2-méthoxyméthyléthoxy)propanol.
